## Europäisches Patentamt
## European Patent Office
## Office européen des brevets

(19)

(11) Veröffentlichungsnummer: **0 076 419**
A2

(12) # EUROPÄISCHE PATENTANMELDUNG

(21) Anmeldenummer: **82108659.2**

(22) Anmeldetag: **20.09.82**

(51) Int. Cl.³: **B 23 B 31/34**
**B 23 B 31/16**

(30) Priorität: **01.10.81 DE 3139116**

(43) Veröffentlichungstag der Anmeldung:
**13.04.83 Patentblatt 83/15**

(84) Benannte Vertragsstaaten:
**AT CH DE FR GB IT LI**

(71) Anmelder: **EMAG MASCHINENFABRIK GMBH**
**Austrasse 24**
**D-7335 Salach/Württemberg(DE)**

(72) Erfinder: **Hessbrüggen, Norbert**
**Sudetenstrasse 47/2**
**D-7321 Eschenbach(DE)**

(74) Vertreter: **Zmyj, Erwin, Dipl.-Ing.**
**Postfach 95 04 28**
**D-8000 München 95(DE)**

(54) **Verfahren und Vorrichtung zum Spannen von Werkstücken.**

(57) Das Spannsystem ist insbesondere für Schwenkfutter von Drehmaschinen einsetzbar, welches eine geringe umlaufende Masse aufweisen soll. Aus diesem Grunde ist eine außerhalb der Drehmaschine angeordnete zentrisch spannende Spannvorrichtung 32 vorgesehen, die die einzelnen Werkstücke zentrisch spannt und fluchtend ausrichtet. In dieser Lage werden die Werkstücke von einer Zubringevorrichtung 27 übernommen und dem Spannfutter 26 der Drehmaschine in dieser zentrischen Ausrichtung dargeboten, welches als ausgleichend spannendes Spannfutter ausgebildet ist, so daß bei diesem Futter eine Synchronisiervorrichtung entfallen kann, die für das zentrische Spannen notwendig wäre.

Fig. 4

EP 0 076 419 A2

Verfahren und Vorrichtung zum Spannen

von Werkstücken

Die Erfindung bezieht sich auf ein Verfahren und eine Vorrichtung zum Spannen von Werkstücken in einem Spannfutter mit Ausgleich für die Spannbacken, insbesondere einem Spannbacken-Schwenkfutter einer Werkzeugmaschine.

Zum Spannen von Rohrabschnitten, z. B. Muffen, die beidseitig in zwei aufeinander folgenden Arbeitsgängen bearbeitet werden müssen und zu diesem Zweck in einem Schwenkfutter gespannt werden, sind im wesentlichen zwei Systeme bekannt, von denen das eine mit einem einseitig spannenden Zweibackenfutter und das andere mit einem beidseitig und zentrierend spannenden Zweibackenfutter arbeitet.

Die zu spannenden Werkstücke haben von ihrer Vorfertigung her, nämlich bei der Rohrherstellung, Toleranzen im Aussendurchmesser die im Bereich von mehreren Millimetern liegen. Wenn die innere Kontur bearbeitet wird, so soll diese aber innerhalb weniger Zehntel Millimeter zum äußeren Spanndurchmesser rundlaufen.

Bei einem einseitig spannenden Zweibackenfutter, bei dem nur die eine Spannbacke den Spannhub ausführt und die andere Spannbacke als Gegenlager dient, ist ein zentrisches Spannen nur bedingt möglich. Man gleicht die Durchmesser-unterschiede meist durch Beilagen unter den Spannbacken
einigermaßen aus, indem man entsprechend dem Istmaß
der Spanndurchmesser, die man zu diesem Zweck nach
Chargen ordnen muß, eine ungefähr zentrische Lage des
Werkstückes zur Drehachse herstellt. Dies ist nicht nur
besonders arbeitsintensiv, sondern führt auch zu ungenauen
Ergebnissen.

Diese Nachteile werden bei einem beidseitig und zentrierend
spannenden Zweibackenfutter, bei dem beide Spannbacken
zwangsläufig den gleich großen Spannhub ausführen, behoben,
doch ist der hierfür erforderliche konstruktive und fertigungstechnische Aufwand für die Synchronisation der beiden
Spannbacken sehr groß und führt vor allen Dingen zu Spannfuttern mit verhältnismäßig großen Körperabmessungen und
Schwungmassen. Der Grund dafür ist systembedingt, denn der
Synchronmechanismus für die beiden Spannbacken ist im
Futter untergebracht und muß daher mit diesem umlaufen.

Aufgabe der Erfindung ist es, ein Verfahren und eine
Vorrichtung anzugeben, mit deren Hilfe bei einem geringen
Arbeitsaufwand und einem Spannfutter mit geringen Schwungmassen ohne Synchronisiermechanismus ein zentrisches
Spannen von Werkstücken mit unterschiedlichen Durchmessern
möglich ist.

Diese Aufgabe wird, ausgehend von einem Verfahren der
eingangs erläuterten Art erfindungsgemäß dadurch gelöst,
daß das Werkstück außerhalb des Spannfutters der Werkzeugmaschine zentrisch gespannt und in zentrischer Ausrichtung in bezug auf das Spannfutter in dieses eingebracht und dort so lange gehalten wird, bis sich das
mit Ausgleich für die Spannbacken versehene Spannfutter der Werkstücklage angepaßt hat, worauf die Spannbacken
in ihrer dem Werkstück angeglichenen Lage blockiert
werden.

Das Grundprinzip der Erfindung besteht also darin, daß man
das Werkstück durch eine Spanneinrichtung, die ein zentrisches Spannen ermöglicht, außerhalb des Spannfutters
der Werkzeugmaschine spannt und in der zentrischen Spannlage dem Spannfutter der Werkzeugmaschine ausgerichtet
darbietet, so daß sich die ausgleichend spannenden Spannbacken des Spannfutters an dieses Werkstück anlegen können.
Auf diese Weise ist einerseits das Sortieren der Werkstücke und das Einbringen von Unterlagen vermieden, wie
dies bei einem Spannsystem mit einem einseitig spannenden
Zweibackenfutter notwendig war, und außerdem wird die
Schwungmasse des Spannfutters gering gehalten, da der
Synchronmechanismus entfallen kann. Dies ist insbesondere
bei Schwenkfuttern von großer Bedeutung, da diese Futter
wegen des notwendigen Schwenkmechanismus ohnehin schon
eine verhältnismäßig große Schwungmasse aufweisen.

Neben der bereits erwähnten Spannvorrichtung mit zwangsweise synchron zueinander geführten Spannbacken ist für
das Einführen des zentrisch gespannten Werkstückes in das
Spannfutter der Werkzeugmaschine eine mechanische Zubringvorrichtung, z. B. eine Ladeeinrichtung oder ein Roboter,
notwendig, da das Werkstück nur durch eine solche mechanische Ladehilfe in der zentrischen Lage gehalten werden
kann, bis die ausgleichend spannenden Spannbacken des
Spannfutters der Werkzeugmaschine das Werkstück erfaßt
haben. Mit der menschlichen Hand könnte das Werkstück
bei dem Spannvorgang nicht in dieser zentrischen Lage
gehalten werden.

Die Zubringervorrichtung kann ein Greiferfutter mit ausgleichend spannenden Backen aufweisen, um die durch die
zentrisch spannende Spannvorrichtung erzielte zentrische
Lage nicht mehr zu verändern oder das Greiferfutter der
Zubringervorrichtung kann eine zentrisch spannende
Spannvorrichtung aufweisen, so daß ebenfalls gewährleistet ist, daß das einmal zentrisch gehaltene Werkstück in seiner zentrischen Ausrichtung nicht mehr verändert wird.

Es ist aber auch möglich, daß die zentrisch spannende
Spannvorrichtung nicht stationär angeordnet ist, sondern
daß die Zubringervorrichtung die zentrisch spannende Spannvorrichtung aufweist, so daß die stationär angeordnete
Spannvorrichtung entfallen kann. Dies ist aber nur dann
zu empfehlen, wenn es sich um kurze Werkstücke handelt,
da lange Werkstücke durch eine stationäre zentrisch
spannende Spannvorrichtung besser ausgerichtet werden
können, da hier größere Spannlängen zur Verfügung stehen
als an dem Greiferfutter, das das Werkstück an das Spannfutter der Werkzeugmaschine übergeben muß.

Die Erfindung ist in der Zeichnung beispielsweise dargestellt. In den stark schematisierten Darstellungen
zeigen:

Fig. 1    einen Querschnitt durch ein einseitig spannendes
          Schwenkfutter einer Drehmaschine;

Fig. 2    einen Querschnitt durch ein zentrisch spannendes
          Schwenkfutter einer Drehmaschine;

Fig. 3    einen Längsschnitt durch das Schwenkfutter nach
          Fig. 2;

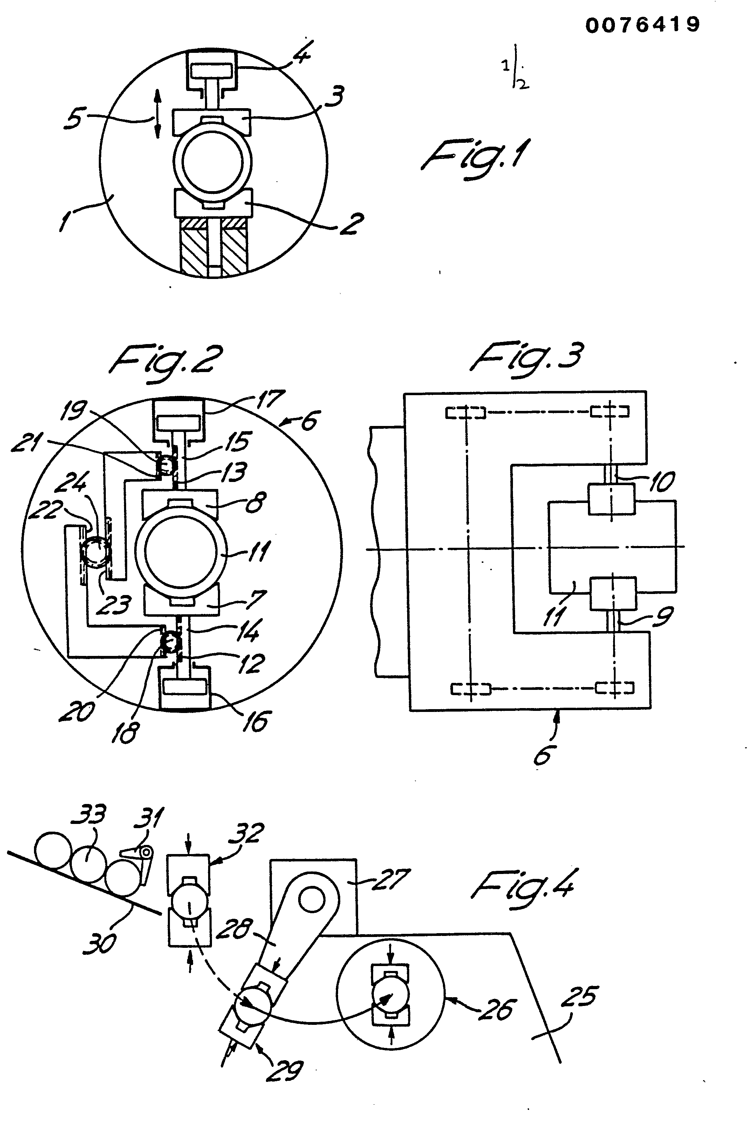

Fig. 4    eine Teilansicht eines Spindelstockes einer
          Drehmaschine mit Schwenkfutter und einer Zubringevorrichtung sowie eine außerhalb der
          Drehmaschine angeordnete zentrisch spannende
          Spannvorrichtung;

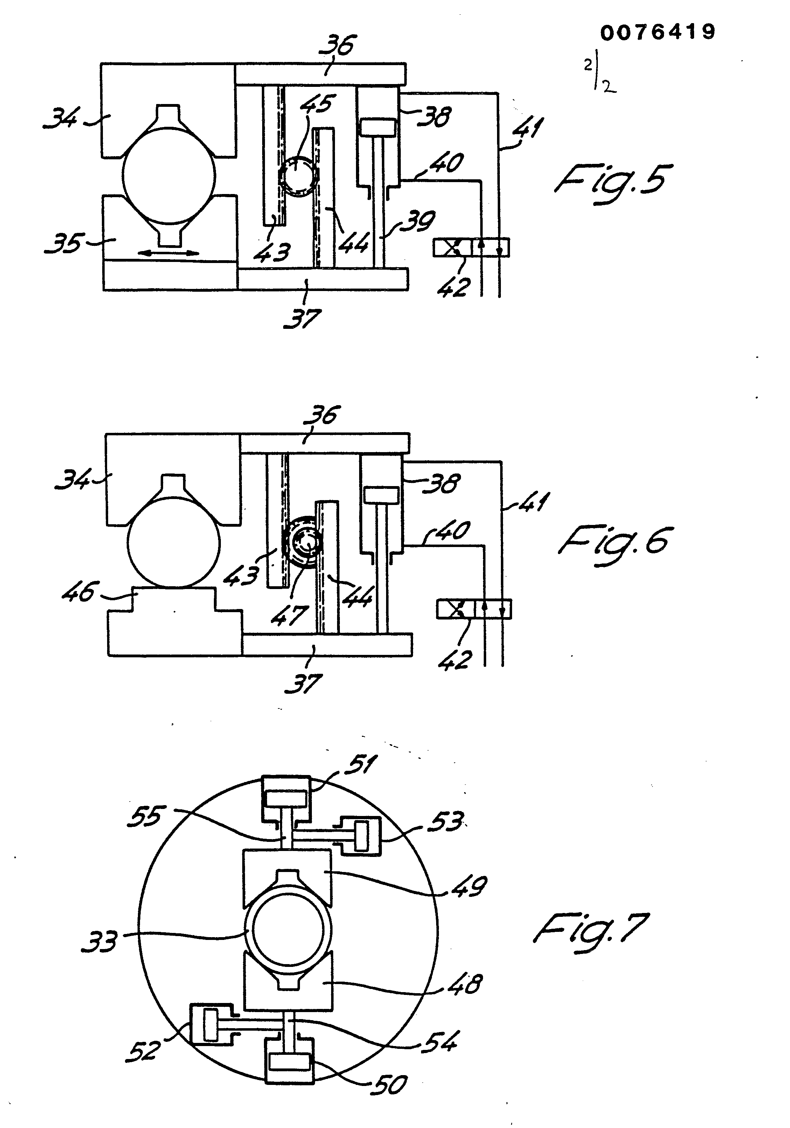

Fig. 5    eine erste Ausführungsform einer zentrisch spannenden Spannvorrichtung;

Fig. 6    eine zweite Ausführungsform einer zentrisch
          spannenden Spannvorrichtung;

Fig. 7    einen Querschnitt durch das Schwenkfutter der
          Drehmaschine gemäß Fig. 4.

Fig. 1 zeigt ein bekanntes einseitig spannendes Schwenkfutter 1 einer Drehmaschine, bei welchem die eine Spannbacke 2 feststehend und die gegenüberliegende Spannbacke
3 mittels eines hydraulischen Arbeitszylinders 4 in
Richtung des Doppelpfeiles 5 verschiebbar ist. Nachteilig
bei diesen einseitig spannenden Schwenkfuttern ist die
Tatsache, daß eine zentrische Spannung bei unterschiedlichen Außendurchmessern der Werkstücke nicht möglich ist,
und daß dieser Nachteil durch Anbringung von Einlagen
ausgeglichen werden muß.

Das Schwenkfutter nach den Fig. 2 und 3, das ebenfalls
bekannt ist, ist insgesamt mit dem Bezugszeichen 6 versehen und weist zwei gegenläufige Spannbacken 7 und 8 auf,
die um die Achsen 9 und 10 schwenkbar gelagert sind, so daß ein von diesen Backen 7 und 8 erfaßtes Werkstück 11
nach der Bearbeitung an der einen Seite geschwenkt und
ohne Umspannung an der anderen Seite bearbeitet werden
kann, die dann aufgrund der Schwenkbewegung an die Vorderseite des Schwenkfutters gelangt. Um ein zentrisches
Spannen mittels der Backen 7 und 8 zu ermöglichen ist
ein Synchronisiermechanismus vorgesehen, der Zahnstangen
12 und 13 aufweist, die an Kolbenstangen 14 und 15 von
Arbeitszylindern 16 und 17 vorgesehen sind, welche zur
Betätigung der Spannbacken 7 und 8 dienen. Mit den Zahnstangen 12 und 13 kämmen Ritzel 18 und 19, die ihrerseits mit Zahnstangen 20 und 21 in Eingriff stehen, die
an ihren jeweils gegenüberliegenden Enden weitere Zahnstangen 22 und 23 aufweisen, die über ein Ritzel 24 miteinander gekuppelt sind, so daß eine zwangsweise gegenläufige Führung der Spannbacken 7 und 8 erzielt   wird.
Bei diesem Schwenkfutter treten zwar die Nachteile des
in Fig. 1 dargestellten einseitig spannenden Schwenkfutters nicht auf, doch führt der Synchronisiermechanismus
zu größeren Körperabmessungen des Schwenkfutters und damit
zu einer wesentlich erhöhten umlaufenden Masse.

Fig. 4 zeigt einen Teil eines Spindelstockes 25 einer
Drehmaschine mit Schwenkfutter 26 sowie einer Zubringevorrichtung 27, die einen Schwenkarm 28 und ein Greiferfutter 29 umfaßt. Weiterhin ist außerhalb der Drehmaschine
eine Werkstückzuführung 30 mit einer Vereinzelungsvorrichtung
31 und einer zentrisch spannenden Spannvorrichtung 32 vorgesehen.

Die auf der Werkstückzuführung 30, die in Form einer
schrägen Rutsche ausgebildet ist, nachrückenden Werkstücke 33 werden durch die Werkstückvereinzelungsvorrichtung 31 so angehalten, daß jeweils nur ein Werkstück
zu der zentrisch spannenden Spannvorrichtung gelangen
kann, die in zwei verschiedenen Ausführungsformen in
den Fig. 5 und 6 dargestellt ist. Nach dem zentrischen
Spannen des Werkstückes durch die Spannvorrichtung 32
wird das Werkstück durch das Spannfutter 29 der Zubringevorrichtung 27 erfaßt worauf der Schwenkarm 28
das ausgleichend oder zentrisch spannende Spannfutter
der Zubringevorrichtung in eine koaxiale Lage bezogen
auf die Futterachse des Schwenkfutters 26 der Drehmaschine
bringt. Dort wird das Werkstück in der zentrischen Lage
gehalten, bis es von den ausgleichend spannenden Spannbacken des Schwenkfutters 26 erfaßt ist. Nach der Bearbeitung des Werkstückes wiederholt sich dieser Vorgang.
In Fig. 5 ist ein erstes Ausführungsbeispiel der außerhalb der Drehmaschine angeordneten zentrisch spannenden
Spannvorrichtung dargestellt, die zwei Prismenbacken 34
und 35 umfaßt, die an Konsolen 36 und 37 sitzen, von
denen die eine mit einem Zylinder 38 und die andere
mit der Kolbenstange 39 des Zylinders 38 verbunden ist.
Der Zylinder 38 ist als doppelt wirkender Arbeitszylinder
ausgeführt und weist zwei Zuführungsleitungen 40 und 41
für das Arbeitsöl auf, dessen Zuführung durch einen
Steuerschieber 42 überwacht wird. Jede der beiden Konsolen 36 und 37 ist mit einer Zahnstange 43 und 44 festverbunden, die über ein Ritzel 45 miteinander gekuppelt
sind, so daß die zwangsweise gegenläufige Bewegung der
Prismenbacken 34 und 35 gewährleistet ist.

Bei der Ausführungsform der zentrisch spannenden Spannvorrichtung nach Fig. 6 ist der untere Prismenbacken 35 der Ausführungsform nach Fig. 5 durch einen Spannbacken 46 ersetzt, der eine ebene Spannfläche aufweist. Aus diesem Grunde ist es erforderlich, die Kuppelung der Zahnstangen 43 und 44 über ein Stufenritzel 47 vorzunehmen wodurch eine unterschiedliche Bewegungsgeschwindigkeit der beiden gegenläufigen Backen 34 und 46 erzielt wird. Das Übersetzungsverhältnis muß den Winkelunterschied zwischen der Prismenbacke und der geraden Backe entsprechen, um zentrisch zu spannen. Das Stufenritzel 47 weist zwei Ritzelstufen mit unterschiedlichen Durchmessern auf von denen die eine Stufe mit der Zahnstange 43 und die andere Stufe mit der Zahnstange 44 kämmt. Im übrigen entspricht die Ausgestaltung der Spannvorrichtung derjenigen nach Fig. 5.

Aufgrund der Tatsache, daß das Werkstück 33 durch die zentrisch spannende Spannvorrichtung 32 zentrisch gespannt und durch die Zubringevorrichtung 27 dem Spannfutter 26 der Drehmaschine in zentrischer und fluchtender Ausrichtung dargeboten wird, genügt es, daß das Spannfutter 26 nur als ausgleichend spannendes Futter ausgebildet ist, welches keinen Synchronmechanismus aufzuweisen braucht. Ein solches ausgleichend spannendes Spannfutter ist in Fig. 7 dargestellt.

Wie die Darstellung in Fig. 7 zeigt, sind bei dem ausgleichend spannenden Schwenkfutter 26 zwei gegenüberliegende Prismenbacken 48 und 49 vorgesehen, die durch jeweils einen hydraulisch arbeitenden Spannzylinder 50 und 51 verschiebbar sind, bis sie am zentrisch und fluchtend ausgerichtet gehaltenen Werkstück 33 anliegen und dieses ausreichend fest erfassen. In dieser Lage sind die Spannbacken 48 und 49 durch Klemmzylinder 52 und 53, die auf Kolbenstangen 54 und 55 der Arbeitszylinder 50 und 51 einwirken, arretierbar. Erst wenn die Spannbacken 48
und 49 in ihrer Spannlage arretiert sind, wird das
Werkstück 33 von dem Spannfutter 29 der Zubringevorrichtung 27 freigegeben. Auf diese Weise kommt man bei dem
Schwenkfutter 26 ohne Synchronisiervorrichtung aus, wodurch die umlaufende Masse wesentlich verkleinert werden
kann.

Patentansprüche

1. Verfahren zum Spannen von Werkstücken in einem Spannfutter mit Ausgleich für die Spannbacken, insbesondere
einem Zweibacken-Schwenkfutter einer Werkzeugmaschine,
dadurch gekennzeichnet, daß das Werkstück außerhalb des
Spannfutters der Werkzeugmaschine zentrisch gespannt
und in zentrischer Ausrichtung in bezug auf das Spannfutter in dieses eingebracht und dort so lange gehalten
wird, bis sich das mit Ausgleich für die Spannbacken
versehene Spannfutter der Werkstücklage angepaßt hat,
worauf die Spannbacken in ihrer dem Werkstück angeglichenen Lage blockiert werden.

2. Vorrichtung zur Durchführung des Verfahrens nach
Anspruch 1, dadurch gekennzeichnet, daß zum zentrischen
Spannen außerhalb des Spannfutters (26) der Werkzeugmaschine eine Spannvorrichtung (32) mit zwangsweise
synchron zueinander geführten Spannbacken (35, 35; 46)
vorgesehen ist und daß zum Einführen des zentrisch gespannten Werkstückes (33) in das Spannfutter (26) der
Werkzeugmaschine eine mechanische Zubringevorrichtung
(27), z. B. eine Ladeeinrichtung oder ein Roboter dient.

3. Vorrichtung nach Anspruch 2, dadurch gekennzeichnet, daß die Zubringevorrichtung (27) ein Greiferfutter (29) mit ausgleichend spannenden Spannbacken aufweist.

4. Vorrichtung nach Anspruch 2, dadurch gekennzeichnet, daß die Zubringevorrichtung eine zentrisch spannende Spannvorrichtung aufweist.

5. Vorrichtung nach Anspruch 2, dadurch gekennezeichnet, daß die Zubringevorrichtung die zentrisch spannende Spannvorrichtung aufweist.

Fig.1

Fig.2

Fig.3

Fig.4

Fig.5

Fig.6

Fig.7